# FASCICULE DE BREVET EUROPEEN

(11) **EP 3 563 288 B1**
(45) Date de publication et mention de la délivrance du brevet: **02.12.2020**
(21) Numéro de dépôt: 17821956.4
(22) Date de dépôt: 28.12.2017
(51) Int. Cl.: G06K 7/10

(54) **LECTEUR DE CODE À BARRES**
STRICHCODE-LESER
BARCODE READER

(30) Priorité: 29.12.2016 FR 1601892
(43) Date de publication de la demande: 06.11.2019
(73) Titulaire: Revenue Collection Systems France SAS, 91220 Plessis-Pâté (FR)
(72) Inventeur: GUIDARD, Jérôme, 91229 Bretigny-Sur-Orge (FR); D'ATHIS, Thierry, 91229 Bretigny-Sur-Orge (FR)
(74) Mandataire: Lavoix
(86) Numéro de dépôt international: PCT/EP2017/084725
(87) Numéro de publication internationale: WO 2018/122316

(56) Documents cités:
- DE-A1-102007 043 609
- US-A1- 2006 131 419
- US-A1- 2007 131 770
- US-A1- 2012 074 338

## Description

La présente invention concerne un lecteur de code à barres comprenant :
- un boîtier dans lequel une fenêtre est ménagée,
- une vitre transparente fixée dans la fenêtre du boîtier, la vitre comprenant une lame,
   la vitre et le boîtier définissant un volume intérieur du lecteur de code à barres, la vitre comportant une face interne située dans le volume intérieur et une face externe située hors du volume intérieur,
- une tête de lecture, disposée dans le volume intérieur faisant face à la vitre, et configurée pour faire l'acquisition d'un code à barres présenté en regard de la face externe de la vitre, et
- au moins une source lumineuse disposée dans le volume intérieur, propre à émettre des rayons lumineux, et configurée pour éclairer le code à barres.

L'invention s'inscrit par exemple dans le domaine des systèmes billettiques utilisés dans les plateformes d'accès à un réseau de transports publics. Ces systèmes billettiques permettent aux usagers, après avoir scanné un code à barres, d'ouvrir un portique d'accès au réseau de transports publics.

Les codes à barres peuvent être des codes à barres une dimension (1D) ou deux dimensions (2D) portés par une multiplicité de supports différents, tels qu'un support papier, une carte plastifiée, ou un écran de smartphone, d'une tablette ou d'un ordinateur.

Les lecteurs de code à barres doivent, d'une part, correctement décoder le code à barres mais également respecter des exigences fonctionnelles telles que la durée de présentation du code à barres devant le lecteur et la distance code à barres-lecteurs, de sorte que le lecteur de code à barres puisse correctement lire ledit code. De telles exigences permettent notamment d'assurer la fluidité du passage des usagers aux portiques.

Il apparaît que ces exigences sont liées à l'éclairage du code à barres à décoder. En effet, il est nécessaire de maîtriser l'éclairage du code à barres pour que la lecture du code à barres puisse aboutir.

On connait actuellement des lecteurs de code à barres comportant un éclairage interne au lecteur dirigé en direction de la vitre transparente du lecteur pour éclairer le code à barres présenté en regard de la vitre transparente. L'éclairage interne comporte plusieurs sources lumineuses propres à émettre des faisceaux lumineux dirigés sensiblement perpendiculairement à la vitre pour éclairer le code à barres.

Les document US 2012/074338 A1, US 2006/131419 A1 et DE 10 2007 043 609 A1 décrivent des lecteurs comportant des sources de lumière.

Ce type de lecteur de code à barres ne donne pas entièrement satisfaction. En effet, les usagers sont éblouis par la source lumineuse, comprenant souvent des LED (Light-Emitting Diode), émettant un rayonnement lumineux de forte intensité et de la lumière bleue.

De plus les faisceaux émis par les sources lumineuses sont réfléchis sur la surface de certains supports de code à barres en direction de la tête de lecture du lecteur, ce qui dégrade fortement le décodage du code à barres.

L'un des buts de l'invention est de pallier ces inconvénients en proposant un lecteur de codes à barres limitant l'éblouissement de l'utilisateur et la réflexion des faisceaux lumineux sur l'ensemble des supports précités vers la tête de lecture tout en assurant un éclairage suffisant des supports présentés.

A cet effet, l'invention a pour objet un lecteur du type précité ayant en outre des caractéristiques selon la partie
caractérisante de la revendication 1.

Le lecteur de code à barres de l'invention peut comprendre l'une ou plusieurs des caractéristiques des revendications 2 à 6 et/ou la caractéristiques selon laquelle le lecteur de code à barres comporte un écran opaque disposé entre la ou chaque source lumineuse et la tête de lecture.

D'autres aspects et avantages de l'invention apparaîtront à la lecture de la description qui suit, donnée uniquement à titre d'exemple, et faite en se référant aux dessins annexés, dans lesquels :
- la figure 1 est une vue en coupe axiale d'un lecteur de codes à barres,
- la figure 2 est une vue de détail en coupe d'un rayon incident arrivant sur la vitre transparente du lecteur de code à barres selon une variante de la figure 1,
- la figure 3 est une vue en perspective de la vitre transparente selon un premier mode de réalisation de l'invention,
- la figure 4 est une vue en coupe prise selon la ligne de coupe IV-IV de la figure 3, et
- la figure 5 est une vue en coupe de la vitre transparente selon un autre mode de réalisation du lecteur de code à barres selon l'invention.

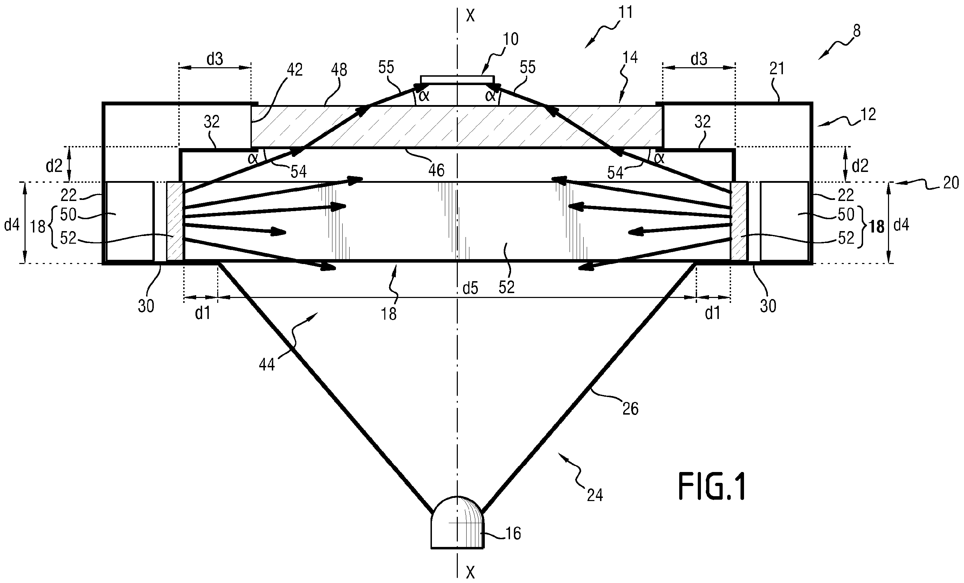

En référence à la figure 1, une structure d'un lecteur de code à barres 8 est décrite.

La figure 1 est une figure schématique et n'est pas à l'échelle des valeurs numériques indiquées dans la suite de la description.

En référence à la figure 1, le lecteur de code à barres 8 est adapté pour lire et traiter un code à barres porté par un support tel qu'un papier, une carte plastifiée, un écran d'un smartphone, d'une tablette ou d'un ordinateur portable. Un tel support comprenant un code à barres est identifié par la référence 10.

Le lecteur de codes à barres 8 présente un axe de lecture X-X suivant lequel le support 10 de code à barres doit être disposé, avec le code à barres, tourné vers une face avant du lecteur de code à barre 8, désignée par la référence 11 sur la figure 1.

Le lecteur de code à barres 8 comporte un boîtier 12 obturé par une vitre 14 transparente, centrée sur l'axe X-X et formant la partie centrale de la face avant 11 du lecteur 8.

Dans le boîtier 12 sont disposées une tête de lecture 16 et jusqu'à quatre sources lumineuses 18 latérales.

La tête de lecture 16 est configurée pour faire une acquisition et lire le code à barres présenté en regard de la face avant 11 du lecteur 8.

Le boîtier 12 comporte une portion avant 20 de forme sensiblement parallélépipédique, comprenant une paroi avant 21 et quatre parois latérales 22, et une portion arrière 24 de forme sensiblement pyramidale, formée d'une paroi 26, recevant à sa pointe suivant l'axe X-X, la tête de lecture 16.

La longueur de la paroi 26, dans le plan de coupe axial, est comprise entre 77 mm et 78 mm.

La portion avant 20 est centrée suivant l'axe de la portion arrière 24 pyramidale. Les portions avant 20 et arrière 24 sont par exemple en un matériau noir et mat. La portion avant 20 et la portion arrière 24 sont reliées l'une à l'autre par une paroi de liaison 30, s'étendant parallèlement à la face avant 11 du lecteur 8. Comme visible sur la figure 1, la paroi de liaison 30 forme un épaulement du boîtier 12.

Une portion de la paroi de liaison 30, identifiée par la distance d1, forme un écran opaque interposé entre les sources lumineuses 18 et la tête de lecture 16. Cet écran opaque s'étend entre un bord de la source lumineuse 18 et le début de la portion arrière 24 pyramidale. Par exemple la distance d1 est comprise entre 5 mm (millimètres) et 8 mm. A titre d'illustration, d1 mesure 6 mm.

La paroi de liaison 30 est formée en un matériau noir et mat.

En variante, dans le cas où la portion arrière 24 est de forme parallélépipédique de même dimension que la portion avant 20, l'écran opaque formé par la portion de la paroi de liaison 30 identifié par la distance d1 est une plaque rapportée, par exemple en un matériau noir et mat, disposée entre les sources lumineuses 18 et la tête de lecture 16.

Le lecteur de code à barres 8 comporte en outre un diaphragme interne 32 s'étendant entre les bords périphériques de la vitre 14 et les sources lumineuses 18, et forme un écran opaque interposé entre les bords de la vitre 14 et les sources lumineuses 18. La face interne du diaphragme 32 est en un matériau noir et mat. Par exemple, le diaphragme 32 est réalisé en un matériau non réfléchissant.

Une fenêtre 42 ménagée dans la paroi avant 21 du boîtier reçoit la vitre 14. Le boîtier 12 et la vitre 14 forment un volume intérieur 44 du lecteur de codes à barres 10.

La vitre 14 transparente est formée d'une lame de forme sensiblement parallélépipédique.

La vitre 14 transparente est, par exemple, en verre, tel que du verre trempé, et comporte un traitement anti-reflet sur une face interne 46, tournée vers le volume intérieur 44 et sur une face externe 48, tournée vers l'extérieur du lecteur de code à barres 8.

Le verre présente un indice optique de 1,5 environ.

Les faces interne et externe 46, 48 sont sensiblement parallèles et définissent une épaisseur de vitre de 6 mm environ.

L'axe de lecture X-X est normal à la face interne 46 et à la face externe 48 de la vitre 14.

Il est défini une direction normale à la lame de la vitre 14.

La direction normale à la lame s'étend le long d'une direction parallèle à l'axe de lecture X-X.

Les sources lumineuses 18 sont disposées dans le volume intérieur 44 du lecteur de code à barres 8, à distance de la vitre 14 selon une direction radiale et une direction axiale. On entend ici par « direction radiale », une direction qui s'étend à partir d'un bord périphérique de la vitre 14 dans le plan de la vitre 14, et par « direction axiale », une direction perpendiculaire au plan de la vitre 14.

Autrement dit, les sources lumineuses 18 sont ménagées dans une zone périphérique de la vitre 14, c'est-à-dire une zone du volume intérieur 44 de la vitre, déportée radialement par rapport au bord périphérique de la vitre 14, et axialement d'une distance inférieure à 20% de la distance séparant la vitre 14 de la tête de lecture 16. Plus précisément, les sources lumineuses 18 sont décalées radialement et axialement par rapport au bord de la vitre 14.

Par exemple, le déport axial, identifié sur la figure 1 par la distance d2 est compris entre 12 mm et 14 mm. A titre d'illustration, d2 mesure 13 mm.

Par exemple, le déport radial, identifié sur la figure 1 par la distance d3 est compris entre 10 mm et 11 mm. A titre d'illustration, d3 mesure 10 mm.

Les distances d2 et d3 représentent respectivement la distance axiale et radiale, séparant la source lumineuse 18 du bord le plus proche de la vitre 14.

Les quatre sources lumineuses 18 comprennent chacune une rangée de sources lumineuses, par exemple une succession de LED 50, et un élément diffusant 52 Dans le cas d'une configuration dont le nombre de sources lumineuses est inférieur à quatre, l'élément diffusant 52 devant la source lumineuse manquante sera remplacé par un matériau opaque noir mat.

Chaque succession de LED 50 est disposée le long des parois latérales 22, contre la paroi de liaison 30.

Les éléments diffusants 52 sont ménagés suivant l'axe d'émission des sources lumineuses 18 pour générer un faisceau lumineux élargi ou pinceau élargi, sensiblement conique dans le volume intérieur 44, avec un axe du faisceau diffusé parallèle à la lame formant la vitre 14. Les éléments diffusants 52 sont arrangés dans le prolongement du diaphragme interne 32, contre la paroi de liaison 30. Les éléments diffusants 52 sont tels qu'aucun rayon du faisceau diffusé n'arrive sur la face interne 46 de la vitre 14 avec un angle α de plus de 35 degrés.

Il est défini une largeur de l'élément diffusant 52 mesurée selon l'axe X-X, repérée sur la figure 1 par la distance d4. Par exemple, d4 mesure 10 mm.

Il est aussi défini une distance d5 sur la figure 1 dite « ouverture de cône ». La distance d5 est mesurée selon une direction perpendiculaire à l'axe X-X. A titre d'illustration, d5 mesure 78 mm.

Le fonctionnement du lecteur de code à barres 10 va à présent être décrit.

Les sources lumineuses 18 émettent chacune un faisceau lumineux ou pinceau, orienté en direction du volume intérieur 44 du boîtier 12 et forment un rayonnement incident sur la totalité de la surface de la vitre 14.

Tous les rayons lumineux issus des sources lumineuses 18 ou rayons lumineux incidents arrivent sur la face interne 46 de la vitre 14 avec un angle d'incidence α inférieur ou égal à 35 degrés avec la face interne 46 de la vitre 14. Deux rayons lumineux incidents 54 et les angles d'incidence α correspondants sont identifiés sur la figure 1.

De manière connue, le même angle α se retrouve entre le rayon transmis 55 au travers de la vitre 14 et la face externe 48 de la vitre 14. Ainsi, tous les rayons lumineux transmis 55 au travers de la vitre 14 ont un angle inférieur à 35 degrés avec la face externe 48 de la vitre 14.

Le code à barres 10 est éclairé avec un éclairage dit « rasant ».

De fait, l'éclairement des surfaces mates et planes ou convexes est satisfaisant.

Par ailleurs, du fait du diaphragme interne 32, aucun rayon lumineux n'est transmis à travers la paroi avant 21, ni ne pénètre dans la vitre 14 par un de ses bords latéraux.

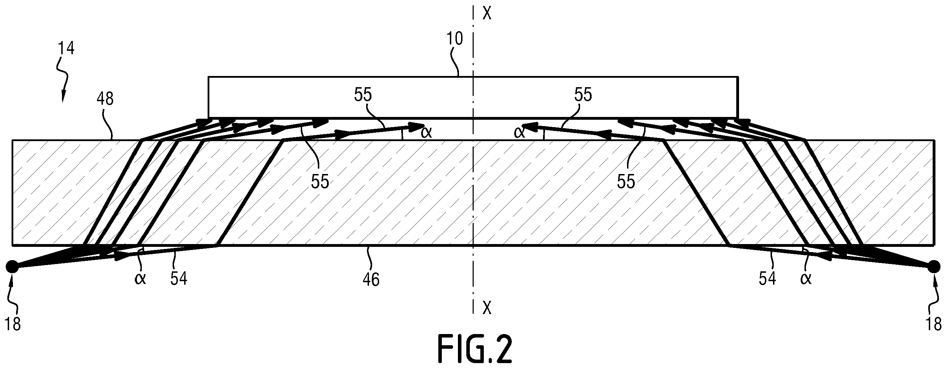

Dans la variante de réalisation de la figure 2, tous les éléments sont identiques au mode de réalisation de la figure 1 à l'exception de la position des sources lumineuses 18. Elles sont déportées axialement par rapport au bord périphérique de la vitre 14, mais disposées au droit de la vitre 14. Elles émettent un faisceau lumineux ou pinceau incident étroit. L'angle incident α formé entre le rayon incident 54 et la face interne 46 de la vitre 14 est inférieur ou égal à 10 degrés. Ce même angle α se retrouve entre le rayon lumineux transmis 55 au travers de la vitre 14 et la face externe 48 de la vitre 14.

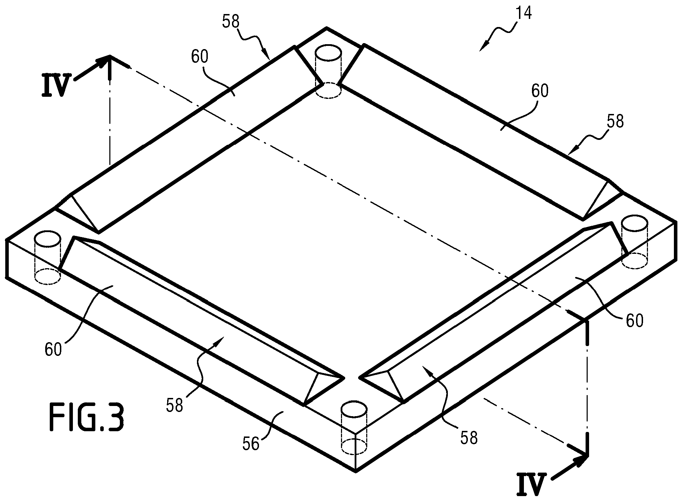

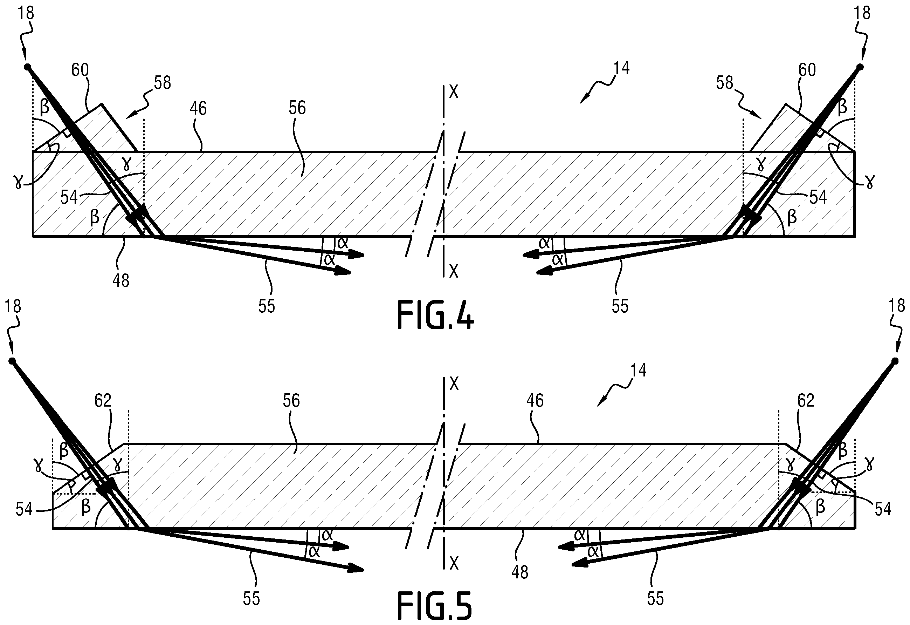

En référence aux figures 3 et 4, la vitre 14 comporte une face périphérique d'entrée des rayons lumineux incidents 54 émis par les sources lumineuses 18.

Plus précisément, la face interne 46 de la vitre 14 comporte la face périphérique d'entrée des rayons lumineux incidents 54.

La vitre 14 comporte une lame 56 de forme sensiblement parallélépipédique et quatre prismes 58.

Les prismes 58 sont arrangés en carré suivant les quatre bords de la lame 56. Ils sont plaqués contre la face interne de la lame 56. Les prismes 58 sont collés avec une colle optique sur la face interne de la lame 56. Les faces libres 60 des prismes 58 définissent la face périphérique d'entrée des rayons lumineux incidents 54.

Ces faces libres 60 des prismes 58 sont tournées radialement vers l'extérieur de la lame 56 et forment un angle β, strictement supérieur à 48,19 degrés et proche de 48,19 degrés avec la direction normale à la lame 56 de la vitre 14.

Ainsi, la face périphérique d'entrée est inclinée par rapport à la direction normale à la lame 56 de la vitre 14 et forme un angle β strictement supérieur à 48,19 degrés avec la direction normale à la lame 56.

Autrement dit, la face périphérique d'entrée est inclinée d'un angle β par rapport à la direction normale à la face externe 48 de la vitre 14.

Par exemple, l'angle β est compris entre 48,19 degrés et 57 degrés.

Ainsi, chaque face libre 60 d'un prisme 58 forme une portion de la face périphérique d'entrée.

Chaque portion de la face périphérique est, dans cet exemple, adjacente à un bord de la vitre 14.

Chaque portion de la face périphérique d'entrée est donc aussi inclinée d'un angle β par rapport à la direction normale à la lame 56.

Autrement dit, la face périphérique d'entrée forme un angle γ strictement inférieur à 41,81 degrés avec un plan parallèle à la face externe 18 de la vitre 13 et proche de 41,81 degrés. Par exemple, l'angle γ est strictement inférieur à 41,81 degrés et supérieur ou égal à 33 degrés.

Chaque source lumineuse 18 est disposée en regard de la face libre 60 avec sa direction d'éclairement sensiblement perpendiculaire à ladite face libre 60, suivant la direction normale à la face libre 60, et est apte à émettre un faisceau ou pinceau incident étroit.

Par exemple, les sources lumineuses 18 sont décalées axialement par rapport au bord périphérique de la vitre 14, et plus précisément par rapport au bord périphérique de la lame 56.

Les prismes 58 sont choisis dans une matière ayant un indice optique très proche de celui du verre. Ainsi les rayons lumineux ne sont pas déviés lorsqu'ils traversent le dioptre prisme-lame. Dans le cas d'espèce, les prismes 58 sont en matière plastique tel que du polyméthacrylate de méthyle (PMMA) dont l'indice optique de 1,49 est très proche de l'indice optique du verre. Dans d'autres exemples de réalisation, les prismes sont dans une autre matière. Il est toutefois souhaitable que cette matière ait un indice optique proche de celui de la lame 56 de la vitre 14. Le même angle β se retrouve donc entre le rayon incident 54 et la face externe 48 de la vitre 14. L'angle β de 48,19 degrés, correspond à l'angle de réflexion totale du rayon incident sur la face externe 48 de la vitre 14.

En outre, le même angle γ se retrouve entre le rayon incident 54 et la direction normale à la lame 56.

Tous les rayons lumineux transmis 55 au travers de la vitre 14 forment un angle α inférieur ou égal à 35 degrés avec la face externe 48 de la vitre 14.

Selon un exemple de réalisation, tous les rayons lumineux transmis 55 au travers de la vitre 14 émergent de la face externe 48 de la vitre 14 avec un angle α inférieur ou égal à 10 degrés.

La figure 5 décrit un autre mode de réalisation du lecteur de code à barres 8. Le mode de réalisation de la figure 5 est décrit uniquement par différence au mode de réalisation décrit en relation aux figures 3 et 4. Ce mode de réalisation diffère du mode mode de réalisation des figures 3 et 4 en ce que la vitre 14 ne comporte pas de prisme 58 mais est pourvue de chanfreins 54.

Plus précisément, comme visible sur la figure 5, chaque bord de la lame 56 est pourvu d'un chanfrein 62 délimitant la face périphérique d'entrée des rayons lumineux incidents 54.

Les chanfreins 62 sont orientés radialement vers l'extérieur de la lame 56 et forment un angle β strictement supérieur à 48,19 degrés et proche de 48,19 degrés avec le bord périphérique de la vitre 14 qui s'étend selon la direction normale à la lame 56 de la vitre 14. Par exemple, comme précédemment l'angle β est compris entre 48,19 degrés et 57 degrés.

Ainsi, chaque chanfrein 62 forme une portion de la face périphérique d'entrée.

Chaque source lumineuse 18 est disposée en regard d'un chanfrein 62 avec sa direction d'éclairement sensiblement perpendiculaire au chanfrein 62, suivant la normale au chanfrein 62, et est apte à émettre un faisceau ou pinceau incident étroit. Les sources lumineuses 18 sont décalées axialement et radialement par rapport au bord de la vitre 14, et plus précisément par rapport au bord de la lame 56. Par exemple, le décalage radial et le décalage axial mesurent respectivement entre 5 mm et 15 mm. Les rayons incidents 54 ne sont pas déviés lorsqu'ils traversent le chanfrein 62, et forment le même angle β avec la face externe 48 de la vitre 14.

En variante, le lecteur de code à barres 8 peut comprendre moins de sources lumineuses, par exemple trois sources lumineuses 18.

Dans encore une variante, trois sources lumineuses sont adaptées pour éclairer le code à barres porté par le support 10, et une quatrième source lumineuse 18 est reliée à une unité de commande assurant la commande de son éclairage en fonction de la lecture du code à barres pour donner un retour d'information suite au décodage du code à barres par la tête de lecture 16.

Grâce au lecteur de code à barres 8 selon l'invention, l'utilisateur du lecteur de code à barres n'est pas ébloui lorsqu'il scanne un code à barres.

Par ailleurs, le lecteur de code à barres selon l'invention permet une lecture optimale du code à barres par la tête de lecture. En particulier, l'éclairement des surfaces planes ou convexes portant le code à barres est bon, sans induire, en particulier, de réflexion sur lesdites surfaces planes, réfléchissantes et rétro-éclairées des smartphones ou tablettes portant le code à barres.

## Revendications

1. Lecteur de code à barres (8) comprenant :
- un boîtier (12) dans lequel une fenêtre (42) est ménagée,
- une vitre (14) transparente fixée dans la fenêtre (42) du boîtier (12), la vitre (14) comprenant une lame (56),
la vitre (14) et le boîtier (12) définissant un volume intérieur (44) du lecteur de code à barres (8), la vitre (14) comportant une face interne (46) située dans le volume intérieur (44) et une face externe (48) située hors du volume intérieur (44),
- une tête de lecture (16), disposée dans le volume intérieur (44) faisant face à la vitre (14), et configurée pour faire l'acquisition d'un code à barres présenté en regard de la face externe (48) de la vitre (14),
- au moins une source lumineuse (18) disposée dans le volume intérieur (44), propre à émettre des rayons lumineux (54), et configurée pour éclairer le code à barres, **caractérisé en ce que**
la ou chaque source lumineuse (18) et la vitre (14) sont agencées de sorte que tous les rayons lumineux transmis (55) au travers de la vitre (14) émergent de la face externe (48) de la vitre (14) transparente avec un angle (a) inférieur ou égal à 35 degrés avec la face externe (48) de la vitre (14) et
la face interne (46) de la vitre (14) comporte une face périphérique d'entrée des rayons incidents (54), la ou chaque source lumineuse (18) étant disposée en regard de la face périphérique d'entrée avec sa direction d'éclairement sensiblement perpendiculaire à la face périphérique d'entrée, la face périphérique d'entrée étant inclinée par rapport à une direction normale à la lame (56) de la vitre (14) et formant un angle (β) strictement supérieur à 48,19 degrés avec la direction normale à la lame (56).

2. Lecteur de code à barres (8) selon la revendication 1, comportant un écran opaque (32) disposé entre un bord de la vitre (14) et la ou chaque source lumineuse (18).

3. Lecteur de code à barres (8) selon la revendication 1 ou 2, dans lequel la face périphérique d'entrée présente une pluralité de portions, chaque portion étant adjacente à un bord de la vitre (14), chaque portion de la face périphérique d'entrée étant inclinée d'un angle (β) strictement supérieur à 48,19 degrés avec la direction normale à la lame (56).

4. Lecteur de code à barres (8) selon l'une quelconque des revendications 1 à 3, dans lequel la lame (56) est pourvue d'un chanfrein (62) délimitant la face périphérique d'entrée.

5. Lecteur de code à barres (8) selon l'une quelconque des revendications 1 à 3, dans lequel la vitre (14) comporte un prisme (58) accolé à la lame (56), une face libre (60) du prisme (58) formant la face périphérique d'entrée.

6. Lecteur de code à barres (8) selon l'une quelconque des revendications précédentes, dans lequel la ou chaque source lumineuse (18) et la vitre (14) sont agencées de sorte que tous les rayons lumineux transmis (55) au travers de la vitre (14) émergent avec un angle (a) inférieur ou égal à 10 degrés par rapport à la face externe (48) de la vitre (14).

## Patentansprüche

1. Strichcodeleser (8), umfassend:
- ein Gehäuse (12), in dem ein Fenster (42) eingearbeitet ist,
- eine transparente Scheibe (14), die in dem Fenster (42) des Gehäuses (12) befestigt ist, wobei die Scheibe (14) ein Blatt (56) umfasst,
wobei die Scheibe (14) und das Gehäuse (12) ein Innenvolumen (44) des Strichcodelesers (8) definieren und die Scheibe (14) eine Innenfläche (46), die in dem Innenvolumen (44) liegt, und eine Außenfläche (48), die außerhalb des Innenvolumens (44) liegt, aufweist,
- einen Lesekopf (16), der in dem Innenvolumen (44), der Scheibe (14) zugewandt, angeordnet ist und für die Beschaffung eines Strichcodes, der gegenüber der Außenfläche (48) der Scheibe (14) angeordnet ist, ausgebildet ist,
- mindestens eine Lichtquelle (18), die in dem Innenvolumen (44) angeordnet ist und geeignet ist, Lichtstrahlen (54) auszusenden, und ausgebildet ist, den Strichcode zu beleuchten,
**dadurch gekennzeichnet, dass**
die oder jede Lichtquelle (18) und das Blatt (14) derart angeordnet sind, dass alle durch das Blatt (14) transmittierten Lichtstrahlen (55) aus der Außenfläche (48) der transparenten Scheibe (14) mit einem Winkel (a) kleiner als oder gleich 35° zu der Außenfläche (48) der Scheibe (14) austreten und
die Innenfläche (46) der Scheibe (14) eine Umfangsfläche für den Eintritt von einfallenden Strahlen (54) aufweist, wobei die oder jede Lichtquelle (18) gegenüber der Eintrittsumfangsfläche mit ihrer Beleuchtungsrichtung im Wesentlichen senkrecht zur Eintrittsumfangsfläche angeordnet ist, wobei die Eintrittsumfangsfläche in Bezug auf eine Richtung senkrecht zum Blatt (56) der Scheibe (14) geneigt ist und einen Winkel (β) streng größer als 48,19° mit der Richtung senkrecht zum Blatt (56) bildet.

2. Strichcodeleser (8) nach Anspruch 1, der einen opaken Schirm (32) aufweist, der zwischen einem Rand der Scheibe (14) und der oder jeder Lichtquelle (18) angeordnet ist.

3. Strichcodeleser (8) nach Anspruch 1 oder 2, bei dem die Eintrittsumfangsfläche eine Mehrzahl von Abschnitten aufweist, wobei jeder Abschnitt benachbart zu einem Rand der Scheibe (14) ist und jeder Abschnitt der Eintrittsumfangsfläche um einen Winkel (β) streng größer als 48,19° zu der Richtung senkrecht zum Blatt (56) geneigt ist.

4. Strichcodeleser (8) nach einem beliebigen der Ansprüche 1 bis 3, bei dem das Blatt (56) mit einer Schräge (62) versehen ist, die die Eintrittsumfangsfläche begrenzt.

5. Strichcodeleser (8) nach einem beliebigen der Ansprüche 1 bis 3, bei dem die Scheibe (14) ein an die Scheibe (56) angefügtes Prisma (58) aufweist, wobei eine freie Fläche (60) des Prismas (58) die Eintrittsumfangsfläche bildet.

6. Strichcodeleser (8) nach einem beliebigen der vorhergehenden Ansprüche, bei dem die oder jede Lichtquelle (18) und die Scheibe (14) derart angeordnet sind, dass alle durch die Scheibe (14) transmittierten Lichtstrahlen (55) mit einem Winkel (α) kleiner als oder gleich 10° in Bezug auf die Außenfläche (48) der Scheibe (14) austreten.

## Claims

1. A barcode reader (8) comprising:
- a casing (12) in which a window (42) is arranged,
- a transparent pane (14) fastened in the window (42) of the casing (12), the pane (14) comprising a plate (56),
the pane (14) and the casing (12) defining an inner volume (44) of the barcode reader (8), the pane (14) having an inner face (46) located in the inner volume (44) and an outer face (48) located outside the inner volume (44),
- a reading head (16), arranged in the inner volume (44) facing the pane (14), and configured to acquire a barcode present opposite the outer face (48) of the pane (14),
- at least one light source (18) arranged in the inner volume (44), able to emit light beams (54), and configured to illuminate the barcode,
**characterized in that**
the or each light source (18) and the pane (14) are arranged such that all of the light beams (55) transmitted through the pane (14) emerge from the outer face (48) of the transparent pane (14) with an angle (α) smaller than or equal to 35 degrees with the outer face (48) of the pane (14), and
the inner face (46) of the pane (14) includes a peripheral entry face for incident beams (54), the or each light source (18) being arranged opposite the peripheral entry face with its illumination direction substantially perpendicular to the peripheral entry face, the peripheral entry face being inclined relative to a direction normal to the plate (56) of the pane (14) and forming an angle (β) strictly greater than 48.19 degrees with the direction normal to the plate (56).

2. The barcode reader (8) according to claim 1, including an opaque screen (32) arranged between an edge of the pane (14) and the or each light source (18).

3. The barcode reader (8) according to claim 1 or 2, wherein the peripheral entry face has a plurality of portions, each portion being adjacent to an edge of the pane (14), each portion of the peripheral entry face being inclined by an angle (β) strictly greater than 48.19 degrees with the direction normal to the plate (56).

4. The barcode reader (8) according to any one of claims 1 to 3, wherein the plate (56) is provided with a bevel (62) delimiting the peripheral entry face.

5. The barcode reader (8) according to any one of claims 1 to 3, wherein the pane (14) has a prism (58) alongside the plate (56), a free face (60) of the prism (58) forming the peripheral entry face.

6. The barcode reader (8) according to any one of the preceding claims, wherein the or each light source (18) and the pane (14) are arranged such that all of the light beams (55) transmitted through the pane (14) emerge with an angle (α) smaller than or equal to 10 degrees relative to the outer face (48) of the pane (14).
